# EUROPÄISCHE PATENTANMELDUNG

(11) **EP 4 621 751 A1**
(43) Veröffentlichungstag der Anmeldung: **24.09.2025**
(21) Anmeldenummer: 24165549.7
(22) Anmeldetag: 22.03.2024
(51) Int. Cl.: G08G 1/017, G08G 1/14, H04L 9/06, H04L 9/08

(54) **PARKPLATZINVENTAR**

(71) Anmelder: Toll Collect GmbH, 10785 Berlin (DE)
(72) Erfinder: Lohfelder, Thomas, 15834 Rangsdorf (DE); Kohl, Kai, 16548 Glienicke (DE)

(57) **Zusammenfassung**

Es sind ein computerimplementiertes Verfahren und ein System zum Führen eines Inventars eines mehrere Stellplätze aufweisenden Parkplatzes offenbart. Bei Beendigung einer Fahrt sendet ein Fahrzeuggerät gespeicherte Positionsinformationen zusammen mit einem Identifikationsmerkmal an eine Zentrale. Die Zentrale prüft, ob das Kraftfahrzeug sich auf einem Parkplatz befindet und nimmt das Identifikationsmerkmal oder ein aus dem Identifikationsmerkmal abgeleitetes Pseudonym in ein Inventar des Parkplatzes auf. Nach Wiederaufnahme der Fahrt wird das Identifikationsmerkmal oder gegebenenfalls das Pseudonym aus dem Inventar des Parkplatzes entfernt.

## Beschreibung

Die Offenbarung betrifft ein Verfahren und ein System zum Führen eines Inventars eines Parkplatzes.

### Hintergrund

Für LKW-Fahrer (LKW - Lastkraftwagen) und andere Berufskraftfahrer sind in Europa Lenk- und Ruhezeiten gesetzlich geregelt, um die Sicherheit auf den Straßen zu gewährleisten. Die Fahrer sollen ausgeruht sein und nicht übermüdet die Strecken auf lange Zeit fahren. Regelungen für Lenk- und Ruhezeiten sind beispielsweise in der Verordnung (EU) 2020/1054 der Europäischen Union festgelegt.

Damit eine ausreichende Erholung eines Fahrers möglich ist, braucht dieser einen geeigneten Parkplatz für sein Fahrzeug. Aufgrund der großen Anzahl von LKWs auf den Straßen, insbesondere auf den Autobahnen, kann eine Parkplatzsuche zum Ende der zulässigen Lenkzeit für den Fahrer schwierig sein. Es wäre für den Fahrer hilfreich, Informationen zu freien Abstellplätzen auf einem Parkplatz in seiner Nähe bzw. entlang seiner Route zu erhalten. Hierzu muss die Belegung eines Parkplatzes bekannt sein.

Es sind verschiedene Konzepte zum Bestimmen von freien Abstellplätzen auf Parkplätzen bekannt. Einige dieser Konzepte beruhen auf dem Einsatz von Sensoren auf den Parkplätzen, um eine Belegung der Abstellplätze zu ermitteln. Diese Konzepte erfordern daher großen Aufwand bei der Umsetzung.

Das Dokument EP 2 184 717 A2 offenbart ein Verfahren, eine Vorrichtung und ein System zur Bereitstellung von auf Parkplätzen verfügbaren Stellplätzen. Eine in einem Fahrzeug vorgesehene Mauterhebungs-oder Telematikeinheit sendet eine Anfrage über an der Strecke des Fahrzeugs verfügbare Parkplätze an eine Datenzentrale. Die Datenzentrale ermittelt die verfügbaren Parkplätze an der Strecke des Fahrzeugs und übermittelt die Informationen zu freien Stellplätzen auf den Parkplätzen an die Mauterhebungs- oder Telematikeinheit. Auf vorhandenen Parkplätzen werden verfügbare Stellplätze mit dem Einsatz von Sensoren, z. B. Ultraschallsensoren, ermittelt und an die Datenzentrale übertragen.

Das Dokument DE 10 2020 119 856 A1 offenbart ein System und ein Verfahren zum Bereitstellen eines Parkplatzvorschlags für einen LKW. Es wird bestimmt, ob eine vorgegebene Ruhezeit für den LKW bevorsteht. Falls das bejaht wird, werden ein oder mehrere Parkplätze in einer Umgebung des LKWs bestimmt. Es wird eine aktuelle Parkplatzauslastung bestimmt, wobei die aktuelle Parkplatzauslastung des jeweiligen Parkplatzes mittels eines Fahrerassistenzsystems zumindest eines Personenkraftwagens (PKW), bestimmt wird. Das Fahrerassistenzsystem des PKW detektiert eine Anzahl an freien Stellplätzen und/oder eine Anzahl von Fahrzeugen auf dem jeweiligen Parkplatz. Es wird einer oder mehrere Parkplätze als Parkplatzvorschlag für den LKW bereitgestellt, falls die jeweilige Parkplatzauslastung einer vorgegebenen Bedingung entspricht.

Andere Konzepte, die ohne den Einsatz von Sensoren an Parkplätzen auskommen, beruhen auf Informationen aus Fahrzeugen, um freie oder belegte Abstellplätze zu ermitteln.

Das Dokument EP 2 953 111 A1 offenbart Technologien zur Ermittlung freier Abstellplätze auf LKW-Parkplätzen und zur Mitteilung an LKW-Fahrer. Hierzu sind wenigstens ein zentraler Server und eine Vielzahl von LKWs über eine drahtlose, bidirektionale Kommunikationseinrichtung verbunden. Im zentralen Server werden Positionsdaten sowie Informationen zur Kapazität von LKW-Parkplätzen abgelegt und/oder generiert. In einem abgestellten LKW werden Positionsdaten der Abstellposition erfasst und an den Server übermittelt. Der Server ermittelt aus solchen Positionsdaten mehrerer abgestellter LKWs die Anzahl besetzter Abstellplätze auf einem bestimmten LKW-Parkplatz. Durch einen Vergleich mit den Serverdaten zur Kapazität des LKW-Parkplatzes stellt der Server eine Wahrscheinlichkeit für freie Abstellplätze fest und teilt die Information über die Wahrscheinlichkeit freier Abstellplätze auf diesem LKW-Parkplatz an Fahrer anderer LKWs mit.

Das Dokument EP 3 696 787 A1 beschreibt ein Konzept zum Bereitstellen von Parkplatzverfügbarkeitsinformationen in einer städtischen Umgebung. Auf Nutzer- bzw. Fahrzeugseite wird eine Vorrichtung zum Bereitstellen von Fahrzeug-Ereignisinformationen von wenigstens einem Fahrzeug bereitgestellt. Die Vorrichtung umfasst eine Einrichtung zum Erkennen eines Betriebszustandswechsels des Fahrzeugs, eine Einrichtung zum Ermitteln einer geografischen Position des Fahrzeugs zum Zeitpunkt des erkannten Betriebszustandswechsels und eine Einrichtung zum Senden, ansprechend auf den erkannten Betriebszustandswechsel, von Fahrzeug-Ereignisinformationen betreffend den Betriebszustandswechsel und die geografische Position an einen zentralen Server. Durch die Einbeziehung des Betriebszustandswechsels des Fahrzeugs (zum Beispiel ein Wechsel von Zündung-Aus zu Zündung-An oder umgekehrt) können freiwerdende und besetzte Parkplätze angezeigt werden.

### Zusammenfassung

Aufgabe ist, verbesserte Technologien zum Ermitteln einer Belegung eines Parkplatzes bereitzustellen.

Es sind ein Verfahren nach Anspruch 1 und ein System nach Anspruch 12 offenbart. Weitere Ausführungsformen sind Gegenstand von abhängigen Ansprüchen.

Es ist ein computerimplementiertes Verfahren zum Führen eines Inventars eines mehrere Stellplätze aufweisenden Parkplatzes offenbart. Das Verfahren umfasst folgende Schritte: Während einer Fahrt eines Kraftfahrzeugs werden mittels eines dem Kraftfahrzeug zugeordneten Fahrzeuggeräts Positionsinformationen bestimmt und in einem Speicher des Fahrzeuggeräts gespeichert. Die Positionsinformationen geben jeweils eine Position des Kraftfahrzeugs an. Bei Beendigung der Fahrt werden mittels des Fahrzeuggeräts die gespeicherten Positionsinformationen zusammen mit einem Identifikationsmerkmal an eine zentrale Datenverarbeitungseinrichtung gesendet. Mittels der zentralen Datenverarbeitungseinrichtung wird anhand einer Ankunftsposition geprüft, ob das Kraftfahrzeug sich auf einem Parkplatz befindet. Die Ankunftsposition ist die zuletzt bestimmte Position. Das Identifikationsmerkmal oder ein aus dem Identifikationsmerkmal abgeleitetes Pseudonym wird mittels der zentralen Datenverarbeitungseinrichtung in ein Inventar des Parkplatzes aufgenommen, wenn die Prüfung positiv ausfällt. Nach Wiederaufnahme der Fahrt wird mittels des Fahrzeuggeräts das Identifikationsmerkmal an die zentrale Datenverarbeitungseinrichtung gesendet. Mittels der zentralen Datenverarbeitungseinrichtung wird das Identifikationsmerkmal oder gegebenenfalls das Pseudonym aus dem Inventar des Parkplatzes entfernt.

Des Weiteren ist ein System zum Führen eines Inventars eines mehrere Stellplätze aufweisenden Parkplatzes bereitgestellt. Das System weist ein Fahrzeuggerät, welches einem Kraftfahrzeug zugeordnet ist, und eine zentrale Datenverarbeitungseinrichtung auf. Das Fahrzeuggerät ist eingerichtet, während einer Fahrt des Kraftfahrzeugs Positionsinformationen zu bestimmen, wobei die Positionsinformationen jeweils eine Position des Kraftfahrzeugs angeben, und die Positionsinformationen in einem Speicher zu speichern; bei Beendigung der Fahrt die gespeicherten Positionsinformationen zusammen mit einem Identifikationsmerkmal an eine zentrale Datenverarbeitungseinrichtung zu senden; und nach Wiederaufnahme der Fahrt das Identifikationsmerkmal an die zentrale Datenverarbeitungseinrichtung zu senden. Die zentrale Datenverarbeitungseinrichtung ist eingerichtet, bei Beendigung der Fahrt anhand einer Ankunftsposition zu prüfen, ob das Kraftfahrzeug sich auf einem Parkplatz befindet, wobei die Ankunftsposition die zuletzt bestimmte Position ist, und das Identifikationsmerkmal oder ein aus dem Identifikationsmerkmal abgeleitetes Pseudonym in ein Inventar des Parkplatzes aufzunehmen, wenn die Prüfung positiv ausfällt; und nach Wiederaufnahme der Fahrt das Identifikationsmerkmal oder gegebenenfalls das Pseudonym aus dem Inventar des Parkplatzes zu entfernen.

Die zentrale Datenverarbeitungseinrichtung wird in der vorliegenden Offenbarung auch kurz als Zentrale bezeichnet. Die Zentrale kann einen Prozessor, einen Speicher und eine Kommunikationseinheit aufweisen.

Das Fahrzeuggerät kann einen Prozessor, einen Speicher und eine Kommunikationseinheit aufweisen. Das Fahrzeuggerät kann fest in dem Kraftfahrzeug installiert sein. In diesem Fall kann das Fahrzeuggerät als OBU (OBU - on-board unit) ausgeführt sein. Alternativ kann das Fahrzeuggerät als mobiles Endgerät ausgeführt sein, beispielsweise als Smartphone oder als Tablet. Das mobile Endgerät kann lösbar in dem Kraftfahrzeug angeordnet sein, beispielsweise in einer Halterung oder mittels eines Saugnapfes an einer Frontscheibe des Kraftfahrzeugs.

Die Zentrale und das Fahrzeuggerät können eingerichtet sein, mittels ihrer Kommunikationseinheiten drahtlos miteinander zu kommunizieren und Signale und/oder Daten auszutauschen. Die Kommunikation kann beispielsweise mittels einer Mobilfunkverbindung (z. B. 2G, 3G, 4G oder 5G) erfolgen.

Vorteilhafterweise sind das Fahrzeuggerät und die Zentrale als Komponenten eines Mautsystems ausgebildet. Die Zentrale kann eingerichtet sein, anhand der Positionsinformationen zu bestimmen, ob mautpflichtige Streckenabschnitte befahren wurde und gegebenenfalls eine Mautgebühr zu berechnen. Die Positionsinformationen, welche für die Berechnung der Mautgebühr ermittelt und verwendet werden, können ohne großen zusätzlichen Aufwand ausgewertet werden, um die Belegung eines Parkplatzes zu bestimmen. Es ist keine zusätzliche Hardware oder Infrastruktur (z.B. Sensoren an den Parkplätzen) erforderlich, um die Inventare der Parkplätze zu führen.

Das Fahrzeuggerät kann eine Positionsbestimmungseinrichtung aufweisen oder mit einer Positionsbestimmungseinrichtung gekoppelt sein. Die Positionsbestimmungseinrichtung kann als GNSS-Empfänger (GNSS - global navigation satellite system, globales Navigationssatellitensystem, z. B. GPS - global positioning system und/oder Galileo) ausgeführt sein. In einer Ausführungsform umfassen die Positionsinformationen die jeweilige Position in Form des Längengrads und des Breitengrads. Optional können die Positionsinformationen zusätzlich die Höhe über dem Meeresspiegel umfassen. Die Positionsinformationen können weiterhin die Fahrtrichtung und/oder die Geschwindigkeit des Kraftfahrzeugs umfassen. Die Positionsinformationen können ergänzend zum GNSS mittels eines Gyro-Sensors (Kreiselkompass) und/oder Tachosignalen bestimmt werden.

Es kann vorgesehen sein, dass die Positionsinformationen in vorbestimmten Zeitabständen bestimmt werden. Es ist vorteilhaft, die Positionsinformationen in regelmäßigen Zeitabständen zu bestimmen. Die regelmäßigen Zeitabstände können derart bemessen sein, dass die zuletzt bestimmte Position (die Ankunftsposition) in guter Näherung der tatsächlichen Position entspricht, an welcher die Fahrt beendigt wurde (die Halteposition). Eine übliche Geschwindigkeit für einen LKW beträgt 80 km/h was etwa 22 m/s entspricht. Es kann davon ausgegangen werden, dass sich LKW und andere Fahrzeuge kurz vor Beendigung der Fahrt deutlich langsamer bewegen, mit einer Geschwindigkeit von weniger als 5 m/s. Die Ankunftsposition sollte nicht mehr als 300 m, nicht mehr als 100 m, nicht mehr als 50 m oder nicht mehr als 20 m von der Halteposition entfernt sein. Die regelmäßigen Zeitabstände können daher kleiner als 30 Sekunden, kleiner als 15 Sekunden, kleiner als 5 Sekunden oder kleiner als 3 Sekunden sein. Je kleiner die Zeitabstände gewählt werden, desto größer wird die Übereinstimmung der Ankunftsposition mit der Halteposition. Eine sehr hohe Genauigkeit wird erreicht, wenn die Positionsinformationen in regelmäßigen Zeitabständen von 1 Sekunde bestimmt werden.

Es kann weiter vorgesehen sein, dass die Positionsinformationen einen Zeitstempel umfassen, welcher den Zeitpunkt der Bestimmung der jeweiligen Position angibt. Bei einer Positionsbestimmung in regelmäßigen Zeitabständen kann vorgesehen sein, dass nur die erste bestimmte Positionsinformation einen Zeitstempel (den ersten Zeitstempel) umfasst, welcher den Zeitpunkt der Bestimmung der ersten Position angibt. Die Zeiten für die folgenden Positionsinformationen können anhand des ersten Zeitstempels und des regelmäßigen Zeitabstands bestimmt werden. Es kann aber auch bei dieser Ausführung vorgesehen sein, dass zu weiteren ausgewählten Positionsinformationen oder zu jeder Positionsinformation die jeweils zugehörigen Zeitstempel bestimmt und gespeichert werden.

Mit Parkplatz ist in der vorliegenden Offenbarung eine Fläche mit mehreren Stellplätzen für Kraftfahrzeuge, insbesondere mit LKW-Stellplätzen, gemeint. Der Parkplatz kann beispielsweise an einer Autobahn liegen. Der Parkplatz kann öffentlich oder privat verwaltet werden.

Das Kraftfahrzeug kann ein LKW sein. Gerade für LKW-Fahrer ist aufgrund der gesetzlichen Bestimmungen das rechtzeitige Finden eines Stellplatzes auf einem Parkplatz besonders relevant um die Ruhezeiten einzuhalten. Selbstverständlich kann die hier offenbarte Technologie jedoch auch für das Bestimmen von freien Stellplätzen auf Parkplätzen für andere Kraftfahrzeuge angewendet werden, insbesondere für PKW (PKW - Personenkraftwagen).

Es könnte versucht werden, die Belegung eines Parkplatzes anhand eines einfachen Zählers zu bestimmen. Wenn ein Kraftfahrzeug auf dem Parkplatz hält, wird eine erste Information an die Zentrale gesendet und in der Zentrale wird der Zähler erhöht. Wenn das Kraftfahrzeug den Parkplatz verlässt, wird eine zweite Information an die Zentrale gesendet und der Zähler wird verringert. Dies hat jedoch den Nachteil, dass eine Anfangsbelegung des Parkplatzes in der Regel nicht bekannt ist. Auf einem Autobahnparkplatz (oder auch anderen Parkplätzen) wird realistischerweise immer eine gewisse Anzahl von Kraftfahrzeugen vorhanden sein, die beim Beginn des Verfahrens unbekannt ist. Die mit dem Zähler bestimmte Belegung des Parkplatzes wird also voraussichtlich nie der tatsächlichen Belegung des Parkplatzes entsprechen.

Dieser Nachteil wird mit der erfindungsgemäßen Lehre behoben. Anhand des Identifikationsmerkmals oder des aus dem Identifikationsmerkmal abgeleiteten Pseudonyms wird ein Inventar für den Parkplatz geführt. Das Identifikationsmerkmal wird bei Beendigung der Fahrt zusammen mit den Positionsinformationen an die Zentrale übermittelt. Wenn bestimmt wird, dass das Kraftfahrzeug sich auf einem Parkplatz befindet, wird das Identifikationsmerkmal oder das Pseudonym in das Inventar des Parkplatzes aufgenommen. Wenn das Kraftfahrzeug den Parkplatz verlässt, wird das Identifikationsmerkmal oder das Pseudonym aus dem Inventar entfernt. Verlässt ein anderes Kraftfahrzeug den Parkplatz, das sich nicht im Inventar befindet, z. B. weil es vor Beginn des Verfahrens bereits auf dem Parkplatz war, bleibt das Inventar unverändert. Wenn nun zu einem Startzeitpunkt begonnen wird, für einen Parkplatz ein Inventar mit dem erfindungsgemäßen Verfahren zu führen, so hat der Parkplatz zum Startzeitpunkt eine unbekannte Belegung mit Kraftfahrzeugen. Nachdem alle zum Startzeitpunkt auf dem Parkplatz befindlichen Kraftfahrzeuge den Parkplatz verlassen haben, sollte das Inventar der tatsächlichen Belegung des Parkplatzes entsprechen. Das sollte üblicherweise auf Autobahnparkplätzen bereits nach wenigen Stunden (maximal wenigen Tagen) der Fall sein.

Es kann vorgesehen sein, dass in einem Speicher der Zentrale Positionsdaten (beispielsweise in Form von GNSS-Koordinaten) von Parkplätzen gespeichert sind, und dass die Ankunftsposition mit den gespeicherten Positionsdaten abgeglichen wird, um zu bestimmen, ob das Kraftfahrzeug einen Parkplatz befahren hat. Zusätzlich zu den Positionsdaten kann zu den Parkplätzen jeweils eine Parkplatzkapazität gespeichert sein. Die Parkplatzkapazität gibt die Anzahl von Stellplätzen auf dem Parkplatz an. Bei Autobahnparkplätzen kann die Parkplatzkapazität insbesondere die Anzahl von Stellplätzen für LKW auf dem Parkplatz darstellen. Die Zentrale kann eingerichtet sein, anhand der (von verschiedenen Kraftfahrzeugen) empfangenen Positionsinformationen und Identifikationsmerkmalen ein Inventar für einen Parkplatz zu führen. Die Zentrale kann weiter eingerichtet sein, ausgehend von der bekannten Parkplatzkapazität und dem Inventar des Parkplatzes die Anzahl verbleibender freier Stellplätze auf dem Parkplatz zu ermitteln. Schließlich kann die Zentrale eingerichtet sein, eine Information zu der Anzahl freier Stellplätze auf dem Parkplatz zu versenden, beispielsweise an ein oder mehrere Fahrzeuggeräte, mobile Geräte oder an einen Server einer Webseite/App. Das Fahrzeuggerät kann eingerichtet sein, eine von der Zentrale erhaltene Information zu freien Stellplätzen auf einem oder mehreren Parkplätzen auszugeben, beispielsweise optisch, z. B. mittels einer Anzeige auf einer Anzeigeeinrichtung, und/oder akustisch.

Das Identifikationsmerkmal kann ein Identifikationsmerkmal des Fahrzeuggeräts sein, beispielsweise eine Seriennummer des Fahrzeuggeräts oder eine Identifikationsnummer für das Fahrzeuggerät. Das Identifikationsmerkmal kann auch ein Identifikationsmerkmal des Kraftfahrzeugs sein, beispielsweise eine Fahrzeug-Identifizierungsnummer (FIN) oder das amtliche Kennzeichen. Das Identifikationsmerkmal identifiziert jedes Kraftfahrzeug oder jedes Fahrzeuggerät eindeutig.

In einer Ausführungsform ist vorgesehen, dass nach dem Empfangen der Positionsinformationen mit dem Identifikationsmerkmal in der zentralen Datenverarbeitungseinrichtung das Identifikationsmerkmal pseudonymisiert wird, bevor die Positionsinformationen ausgewertet werden. Bei der Pseudonymisierung wird das Identifikationsmerkmal durch ein Pseudonym ersetzt (z. B. ein Code, bestehend beispielsweise aus einer Buchstabenkombination, einer Zahlenkombination oder einer Buchstaben-Zahlen-Kombination), um die Feststellung der Identität auszuschließen oder zu erschweren. Hiermit können Anforderungen des Datenschutzes erfüllt werden.

Die Zentrale kann eingerichtet sein, das Identifikationsmerkmal mittels einer Hashfunktion in einen Hashwert umzuwandeln. Der Hashwert bildet dann das Pseudonym des Identifikationsmerkmals. Bei dieser Ausführungsform wird der Hashwert in das Inventar des Parkplatzes aufgenommen, wenn das Kraftfahrzeug sich auf einem Parkplatz befindet. Nach Wiederaufnahme der Fahrt wird der Hashwert aus dem Inventar des Parkplatzes entfernt. Der Hashwert ermöglicht eine eindeutige Kennung des Identifikationsmerkmals im Inventar, ohne dass konkrete Daten des Fahrzeuggeräts oder des Kraftfahrzeugs gespeichert werden. Eine geeignete Hashfunktion kann aus der Familie der SHA-Hashfunktionen (SHA - secure hash algorithm, sicherer Hash-Algorithmus) ausgewählt werden, beispielsweise SHA-256.

Es kann auch vorgesehen sein, dass die Hashfunktion auf eine Kombination aus dem Identifikationsmerkmal und einem Salt angewendet wird, um den Hashwert zu erzeugen. Ein Salt ist eine zufällig gewählte Zeichenfolge, die an einen gegebenen Klartext (hier das Identifikationsmerkmal) vor dessen weiterer Verarbeitung mit der Hashfunktion angehängt wird, um die Entropie zu erhöhen. Ein übliches Verfahren in der Kryptografie ist, das Salt regelmäßig auszutauschen (ID-Rotation), um Angriffe zu erschweren. Eine derartige Rotation des Salts (und damit des Pseudonyms eines Fahrzeuges) beeinträchtigt jedoch die Funktion des Verfahrens. Verfahrensgemäß enthält ein Inventar eines Parkplatzes die Pseudonyme der Fahrzeuge, die sich auf dem Parkplatz befinden. Im laufenden Betrieb des Verfahrens werden ständig neue Pseudonyme zu dem Inventar hinzugefügt und vorhandene Pseudonyme aus dem Inventar entfernt. Wird das Pseudonym eines Fahrzeuges ausgetauscht, während es sich auf einem Parkplatz befindet, kann die Abfahrt nicht mehr einer vorherigen Einfahrt zugeordnet werden und das Inventar des Parkplatzes kann nicht mehr konsistent geführt werden.

Bevorzugt erfolgt daher keine Rotation der Pseudonyme. Da die Positionsinformationen und die Pseudonyme im Inventar regelmäßig gelöscht werden, ist es nicht möglich, Personen über lange Zeiträume zu verfolgen. Somit ist eine Rotation der Pseudonyme nicht zwingend erforderlich.

Falls datenschutzrechtliche Bedenken überwiegen sollten, kann alternativ eine Pseudonymrotation mit zwei Pseudonymen eingesetzt werden. Nach dem Eintreffen der Positionsinformationen und des Identifikationsmerkmals in der Zentrale werden zwei Pseudonyme für das Identifikationsmerkmal erzeugt, indem zwei verschiedene Salts zu dem Identifikationsmerkmal hinzugefügt und mittels einer Hashfunktion in zwei Hashwerte umgewandelt werden. Beide Pseudonyme umfassen zusätzlich ein Datum, das angibt, ab wann das Pseudonym gilt. Es gibt dann zwei separate Pseudonym-Salt-Zuordnungstabellen, in denen die beiden Salts gespeichert werden. Jede Tabelle enthält das Salt pro Pseudonym und das Datum, an dem das Salt zuletzt rotiert wurde. Zu bestimmten Zeiten (z. B. alle 5 Tage oder alle 10 Tage) rotiert die Zentrale das ältere Pseudonym. Dafür aktualisiert sie das Salt und das Datum in der jeweiligen Pseudonym-Salt-Zuordnungstabelle. Die Zentrale entfernt immer anhand des älteren Pseudonyms Fahrzeuge aus dem Inventar und fügt neu parkende Fahrzeuge mit ihrem neueren Pseudonym zum Inventar hinzu. Dieser Ansatz kann auf die Verwendung von mehr als zwei Pseudonymen verallgemeinert werden.

Es kann vorgesehen sein, dass die Beendigung der Fahrt durch ein Ausschalten der Zündung des Kraftfahrzeugs, eine Nutzereingabe an dem Fahrzeuggerät oder durch ein Ausschalten des Fahrzeuggeräts bestimmt wird. Wenn das Fahrzeuggerät als OBU ausgeführt ist, führt das Ausschalten der Zündung des Kraftfahrzeugs zum Herunterfahren der OBU. Im Prozess des Herunterfahrens werden die im Speicher vorhandenen Positionsinformationen zusammen mit dem Identifikationsmerkmal an die Zentrale versendet. Bei einer Ausführung des Fahrzeuggerät als mobiles Endgerät (z.B. als Smartphone) kann vorgesehen sein, dass ein Nutzer mittels einer Nutzereingabe angibt, dass die Fahrt beendet ist. Diese Eingabe ist in diesem Fall der Auslöser zum Versenden der Positionsinformationen und des Identifikationsmerkmals an die Zentrale.

Es kann vorgesehen sein, dass nach Wiederaufnahme der Fahrt das Identifikationsmerkmal bei Eintritt einer vorbestimmten Bedingung versendet werden. Die vorbestimmte Bedingung kann das Zurücklegen einer vorbestimmten Strecke oder das Verstreichen einer vorbestimmten Zeitdauer nach Wiederaufnahme der Fahrt sein. Die vorbestimmte Strecke kann beispielsweise 500 m, 1 km oder 2 km sein. Die Strecke sollte derart gewählt werden, dass sichergestellt ist, dass das Kraftfahrzeug den Parkplatz tatsächlich verlassen hat und nicht Rangiermanöver auf dem Parkplatz durchführt. Die vorbestimmte Zeit kann beispielsweise 1 min, 2 min oder 5 min sein. Es kann vorgesehen sein, dass nach Wiederaufnahme der Fahrt neue im Speicher des Fahrzeuggeräts vorhandene Positionsinformationen (seit der Wiederaufnahme der Fahrt bestimmte Positionen) zusammen mit dem Identifikationsmerkmal an die Zentrale übermittelt werden.

Es kann vorgesehen sein, eine Ankunftszeit zu bestimmen und zusammen mit dem Identifikationsmerkmal oder dem aus dem Identifikationsmerkmal abgeleiteten Pseudonym im Inventar zu speichern. Die Ankunftszeit entspricht dem Zeitpunkt der Ankunft des Kraftfahrzeugs auf dem Parkplatz. Bevorzugt wird die Ankunftszeit als Zeitpunkt des Empfangs der Positionsinformationen in der Zentrale bestimmt. Alternativ kann vorgesehen sein, dass die Ankunftszeit aus dem Zeitstempel der Ankunftsposition bestimmt wird, wenn die Ankunftsposition (die zuletzt bestimmte Position) mit einem Zeitstempel versehen ist; oder dass sich die Ankunftszeit aus dem ersten Zeitstempel und der Anzahl der regelmäßigen Zeitabstände bis zur Ankunftsposition ergibt, wenn die Positionsinformationen in regelmäßigen Zeitabständen bestimmt werden und nur der erste Zeitstempel zur ersten Positionsinformation bestimmt wird.

Es kann vorgesehen sein, dass das Identifikationsmerkmal oder das Pseudonym des Identifikationsmerkmals aus dem Inventar des Parkplatzes entfernt wird, wenn seit der Ankunftszeit ein vorbestimmter Zeitraum vergangen ist. Der vorbestimmte Zeitraum kann beispielsweise ein Tag, zwei Tage, drei Tage oder eine Woche sein. Hierdurch kann sichergestellt werden, dass das Inventar von unentdeckten Abfahrten von Kraftfahrzeugen bereinigt wird. Zu einer unentdeckten Abfahrt kann es beispielsweise aufgrund eines technischen Defektes des Fahrzeuggeräts, einem Ausfall des GNSS-Navigationssystem oder einer Störung der Übertragung des Identifikationsmerkmals nach Wiederaufnahme der Fahrt (z. B. wegen eines Funklochs) kommen. Solche unentdeckten Abfahrten sollten eine Ausnahmeerscheinung sein. Insbesondere auf Autobahnparkplätzen kann davon ausgegangen werden, dass ein Kraftfahrzeug dort üblicherweise nur einige Stunden oder maximal wenige Tage verweilt. Eine längere Verweildauer eines Kraftfahrzeugs deutet auf eine unentdeckte Abfahrt hin, die aus dem Inventar entfernt wird.

Es kann vorgesehen sein, dass die Positionsinformationen eine Fahrzeuginformation umfassen, beispielsweise in einem Header. Die Fahrzeuginformation kann Daten zu den Abmessungen des Kraftfahrzeugs, zur Anzahl der Achsen des Kraftfahrzeugs, zur Antriebsart und/oder zur zulässigen Gesamtmasse des Kraftfahrzeugs umfassen. Es kann weiter vorgesehen sein, dass die Zentrale eingerichtet ist, anhand der Fahrzeuginformationen den Platzbedarf des Kraftfahrzeugs abschätzen und mit Abmessungen der auf dem Parkplatz vorhandenen Stellplätze abgleichen. Der Platzbedarf kann im Inventar des Parkplatzes berücksichtigt werden.

In der vorliegenden Anmeldung werden die Begriffe "Kraftfahrzeug" und "Fahrzeug" synonym verwendet, sofern sich nicht explizit etwas Anderes ergibt.

Merkmale, die im Zusammenhang mit dem Verfahren offenbart sind, können in analoger Weise auf das System angewendet werden und anders herum.

### Beschreibung von Ausführungsbeispielen

Im Folgenden werden beispielhafte Ausführungsformen unter Bezugnahme auf Figuren näher erläutert. Es zeigen:
- Fig. 1: eine schematische Darstellung eines Systems,
- Fig. 2: ein Ablaufdiagramm einer ersten Ausführungsform eines Verfahrens zum Führen eines Inventars eines Parkplatzes,
- Fig. 3: ein Ablaufdiagramm einer zweiten Ausführungsform eines Verfahrens zum Führen eines Inventars eines Parkplatzes,
- Fig. 4: eine schematische Darstellung eines Autobahnabschnitts mit einem Parkplatz,
- Fig. 5: eine vergrößerte schematische Darstellung der Autobahnausfahrt zum Parkplatz,
- Fig. 6: eine weitere schematische Darstellung des Autobahnabschnitts.

Im Folgenden werden für gleiche Komponenten/Verfahrensschritte gleiche Bezugszeichen verwendet.

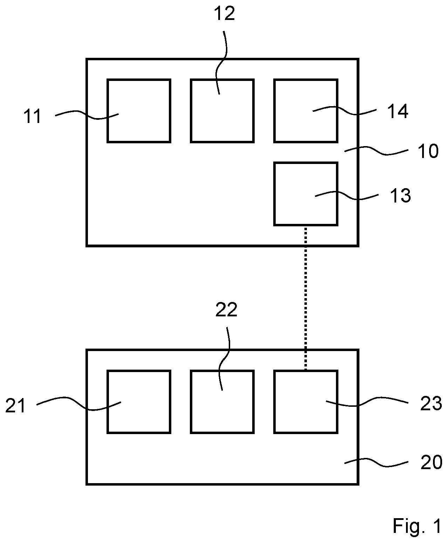

Fig. 1 zeigt eine schematische Ansicht eines Systems. Das System umfasst ein Fahrzeuggerät 10 und eine zentrale Datenverarbeitungseinrichtung 20. Das Fahrzeuggerät 10 weist einen Prozessor 11, einen Speicher 12, eine Kommunikationseinheit 13 und einen GNSS-Empfänger 14 (z. B. GPS oder Galileo) auf. Die zentrale Datenverarbeitungseinrichtung 20 wird auch kurz als Zentrale bezeichnet. Die Zentrale 20 weist einen Prozessor 21, einen Speicher 22 und eine Kommunikationseinheit 23 auf.

Das Fahrzeuggerät 10 ist einem Kraftfahrzeug zugeordnet und üblicherweise in dem Kraftfahrzeug angeordnet. Das Fahrzeuggerät 10 kann als OBU ausgeführt sein. In diesem Fall ist es fest in dem Kraftfahrzeug verbaut. Eine Energieversorgung des Fahrzeuggeräts 10 wird in diesem Fall von dem Kraftfahrzeug bereitgestellt. Alternativ kann das Fahrzeuggerät 10 als mobiles Gerät ausgeführt sein, beispielsweise als Smartphone oder als Tablet. In diesem Fall weist das Fahrzeuggerät 10 eine eigenständige Energieversorgung auf, beispielsweise in Form eines Akkumulators. Alle Komponenten sind bei der Ausführung als mobiles Gerät in das Fahrzeuggerät 10 integriert.

Mittels des GNSS-Empfängers 14 wird in regelmäßigen zeitlichen Abständen (beispielsweise jede Sekunde) die Position des Fahrzeuggeräts 10 und damit auch die Position des dem Fahrzeuggerät zugeordneten Kraftfahrzeugs bestimmt. Jede bestimmte Position wird im Speicher 13 des Fahrzeuggeräts 10 gespeichert. Optional wird zumindest zu der ersten bestimmten Position ein Zeitstempel gespeichert, der angibt, wann die erste Position bestimmt wurde. Optional können auch zu weiteren Positionen, insbesondere zu jeder bestimmten Position, ein dazugehöriger Zeitstempel gespeichert werden. Der GNSS-Empfänger 14 ist in der gezeigten Ausführungsform in das Fahrzeuggerät 10 integriert. Er kann auch separat vom Fahrzeuggerät 10 ausgebildet und mit dem Fahrzeuggerät 10 gekoppelt sein (nicht dargestellt).

Die Kommunikationseinheit 13 des Fahrzeuggeräts 10 ist eingerichtet, Signale und/oder Daten mit der Kommunikationseinheit 23 der Zentrale 20 auszutauschen. Eine Kommunikationsverbindung zum bidirektionalen Austausch von Signalen und/oder Daten zwischen der Kommunikationseinheit 13 des Fahrzeuggeräts 10 und der Kommunikationseinheit 23 der Zentrale 20 kann mit einer Mobilfunkverbindung (z. B. 2G, 3G, 4G oder 5G) hergestellt werden.

Die Zentrale 20 ist eingerichtet, mittels ihres Prozessors 21 die von verschiedenen Fahrzeuggeräten empfangenen Informationen auszuwerten.

In einer Ausführungsform sind das Fahrzeuggerät 10 und die Zentrale 20 als Komponenten eines Mautsystems ausgebildet. In diesem Fall ist die Zentrale 20 eingerichtet, mittels ihres Prozessors 21 die übermittelten Positionsinformationen für eine Mautberechnung auszuwerten, also insbesondere zu prüfen, ob eine mautpflichtige Strecke befahren wurde, und die fällige Mautgebühr zu berechnen. Die erfindungsgemäße Technologie kann ohne großen Aufwand in ein bestehendes Mautsystem integriert werden, sodass aus den von der Mauterfassung vorhandenen Daten Informationen zur Parkplatzbelegung erzeugt und optional an Dritte (z.B. einen Server, eine Web-Plattform, mobile Endgeräte oder LKW) versendet werden.

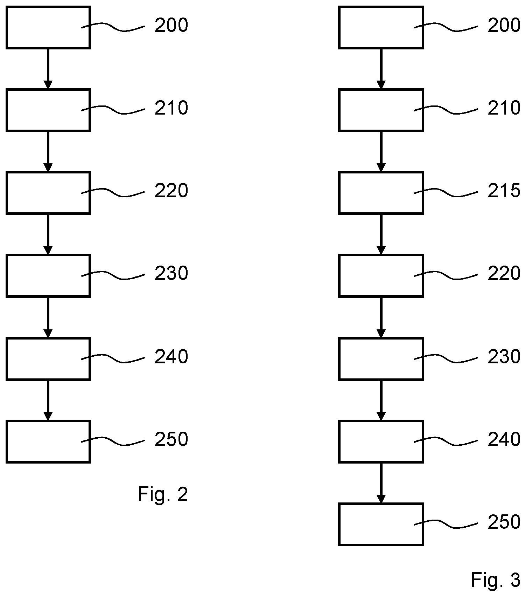

Fig. 2 zeigt ein Ablaufdiagramm für ein Verfahren zum Führen eines Inventars eines Parkplatzes. Während einer Fahrt eines Kraftfahrzeugs wird mit dem GNSS-Empfänger 14 des Fahrzeuggeräts 10 in regelmäßigen Zeitabständen (z. B. jede Sekunde) die Position des dem Fahrzeuggerät 10 zugeordneten Kraftfahrzeugs bestimmt und als Positionsinformation im Speicher 12 abgelegt (Schritt 200). Die Positionsinformationen umfassen wenigstens einen Breitengrad und einen Längengrad. Optional können die Positionsinformationen eine Höhe über dem Meeresspiegel, eine Fahrtrichtung und/oder eine Geschwindigkeit umfassen.

Bei Beendigung der Fahrt werden die im Speicher 12 des Fahrzeuggeräts 10 vorhandenen Positionsinformationen zusammen mit einem Identifikationsmerkmal an die Zentrale 20 übermittelt (Schritt 210). Eine Beendigung der Fahrt wird festgestellt durch Erfassen des Ausschaltens der Zündung des Kraftfahrzeugs (bei Ausgestaltung des Fahrzeuggeräts als OBU) oder durch eine manuelle Nutzereingabe am Fahrzeuggerät (bei Ausgestaltung des Fahrzeuggeräts als mobiles Endgerät).

In der Zentrale 20 wird die Ankunftsposition ausgewertet und mit im Speicher 22 der Zentrale 20 vorhandenen Positionen von Parkplätzen verglichen (Schritt 220). Die Ankunftsposition ist die zuletzt vom Fahrzeuggerät 10 bestimmte Position und gibt in sehr guter Näherung (weil die Positionen in sehr kurzen Abständen ermittelt werden) die Position des abgestellten LKW an. Für diese Auswertung sind verschiedene Verfahren möglich. Bei einer bevorzugten Ausführung wird eine räumliche Verschneidung von Parkplatz-Polygonen (Geofence) mit den übermittelten Positionsinformationen ausgeführt, um zu bestimmen, ob sich die Ankunftsposition auf dem Parkplatz befindet. Ergänzend oder alternativ können virtuelle Erkennungsobjekte (Tore) und/oder eine Klassifikation durch Künstliche Intelligenz verwendet werden.

Wenn die Ankunftsposition auf einem Parkplatz liegt, wird das Identifikationsmerkmal in ein Inventar des Parkplatzes aufgenommen (Schritt 230). Optional kann vorgesehen sein, eine Ankunftszeit mit dem Identifikationsmerkmal im Inventar zu speichern. Die Ankunftszeit gibt an, wann das Kraftfahrzeug auf dem Parkplatz angekommen ist. Die Ankunftszeit entspricht dem Zeitpunkt des Empfangs der Positionsinformationen in der Zentrale 20. Ergänzend kann vorgesehen sein, in der Zentrale 20 die Positionsinformationen zur Berechnung einer Maut auszuwerten, also zu prüfen, ob mautpflichtige Strecken befahren wurden und gegebenenfalls eine fällige Mautgebühr zu berechnen (nicht dargestellt).

Nach Wiederaufnahme der Fahrt wird das Identifikationsmerkmal von dem Fahrzeuggerät 10 an die Zentrale 20 übermittelt, wenn das Kraftfahrzeug eine Strecke von 1 km zurückgelegt hat (Schritt 240). Die Zentrale 20 wird also zeitnah über das Verlassen des Parkplatzes informiert. Optional können mit dem Identifikationsmerkmal alle bis dahin neu bestimmten Positionsinformationen ebenfalls an die Zentrale 20 übermittelt werden.

Wenn die Zentrale 20 das Identifikationsmerkmal nach Wiederaufnahme der Fahrt empfängt, entfernt es dieses aus dem Inventar des Parkplatzes (Schritt 250).

Mit dem Verfahren ist eine Bestimmung der Belegung eines Parkplatzes in Nahe-Echtzeit in der Zentrale 20 möglich. Mittels einer einfachen Differenzbildung kann die Belegung eines Parkplatzes bestimmt werden. In einer Ausführungsform sind in dem Speicher 22 der Zentrale 20 neben den Positionen der Parkplätze auch deren Kapazitäten abgelegt. Durch einen Vergleich der aktuellen Belegung (anhand des Inventars) eines Parkplatzes mit seiner Kapazität kann die Zentrale 20 die Anzahl an freien Abstellplätzen auf diesem Parkplatz ermitteln. In einer Ausführungsform ist die Zentrale 20 eingerichtet, die Anzahl von freien Abstellplätzen auf einem Parkplatz an interessierte Stellen, beispielsweise einen Server, einen Web-Dienst oder ein Fahrzeuggerät, mittels ihrer Kommunikationseinheit 23 zu übermitteln. Die Übermittlung kann als Reaktion auf eine Anfrage oder als Broadcast erfolgen.

Fig. 3 zeigt ein Ablaufdiagramm für ein weiteres Verfahren zum Führen eines Inventars eines Parkplatzes. Die Schritte 200, 210 sowie 220 bis 250 entsprechen der in Fig. 1 gezeigten Ausführungsform. Ein neues, wesentliches Element ist, dass in der Zentrale 20 eine Pseudonymisierung des Identifikationsmerkmals durchgeführt wird (Schritt 215), bevor in Schritt 220 die Positionsinformationen ausgewertet werden. Hiermit können datenschutzrechtliche Erwägungen berücksichtigt werden.

Das Identifikationsmerkmal kann beispielsweise eine eindeutige Identifikation des Fahrzeuggeräts (z. B. die Identifikationsnummer oder die Seriennummer des Fahrzeuggeräts) oder eine eindeutige Identifikation des Kraftfahrzeugs (z. B. das amtliche Kennzeichen des Kraftfahrzeugs) sein. Unter Umständen sind also anhand des Identifikationsmerkmals Rückschlüsse auf den Fahrer des Kraftfahrzeugs möglich. Um dies zu verhindern oder zumindest zu erschweren, wird das Identifikationsmerkmal in der Zentrale mit einer Hashfunktion (z. B. SHA-256) in einen Hashwert umgewandelt. Der Hashwert bildet ein Pseudonym für das Identifikationsmerkmal. Anstelle des Identifikationsmerkmals wird der Hashwert in dem Inventar des Parkplatzes geführt, also in Schritt 230 in das Inventar aufgenommen, optional zusammen mit der Ankunftszeit. Nach Wiederaufnahme der Fahrt wird das vom Fahrzeuggerät 10 übermittelte Identifikationsmerkmal wieder in einen Hashwert umgewandelt und der entsprechende Hashwert wird in Schritt 250 aus dem Inventar des Parkplatzes entfernt. Mit dem Hashwert ist eine eindeutige Zuordnung des Kraftfahrzeugs im Inventar möglich, ohne dass konkrete Informationen zu dem Kraftfahrzeug abgeleitet werden können.

Beispielhaft ermöglicht die Auswertung der pseudonymisierten Identifikationsnummer des Fahrzeuggeräts oder des pseudonymisierten amtlichen Kennzeichens von (mautpflichtigen) Fahrzeugen zusammen mit den Positionsinformationen und optional die Fahrzeuggröße indizierenden Fahrzeugdaten (z. B. die Achszahl oder die zulässige Gesamtmasse) der entsprechenden Fahrzeuge die Ermittlung des Belegungszustands von Parkplätzen. Auf Basis der pseudonymisierten Positionsinformationen wird ermittelt, dass ein (mautpflichtiges) Fahrzeug auf einen Parkplatz einfährt, parkt und später wieder ausfährt. Die Identifikationsnummer des Fahrzeuggeräts oder das amtliche Kennzeichen dieses Fahrzeugs wird bei der Einfahrt in ein Pseudonym umgewandelt und dieses Pseudonym wird bei der Ausfahrt aus dem Parkplatz mit den Pseudonymen der eingefahrenen Fahrzeuge abgeglichen. So kann die Anzahl der sich auf dem Parkplatz befindlichen (mautpflichtigen) Fahrzeuge ermittelt und durch Abgleich mit der Kapazität des Parkplatzes der Belegungsgrad ermittelt werden. Die Verwendung von Pseudonymen ist für den zahlenmäßig genauen Abgleich notwendig, um zu bestimmen, wie viele Stellplätze belegt und damit wie viele Stellplätze noch frei sind. Es kann vorgesehen sein, dass die im Rahmen der Parkerkennung verwendeten Positionsinformationen und die Pseudonyme unverzüglich nach der Parkerkennung und nach der Ermittlung der Ausfahrt eines Fahrzeugs automatisiert gelöscht werden. Es wird lediglich das Ergebnis der zahlenmäßigen Auswertung als Angabe des Belegungsgrades eines Parkplatzes, z. B. als Ampelsystem oder prozentuale Ausweisung der Belegung, zur weiteren Verwendung in nicht personenbezogener Form gespeichert und gegebenenfalls veröffentlicht.

Im Folgenden wird eine weitere Variante zum Bestimmen der Belegung eines Parkplatzes dargestellt. Bei der weiteren Variante ist das Erfassen eines Fahrmanövers ein Auslöser zum Versenden einer Ankunftsinformation, die zum Bestimmen der Belegung eines Parkplatzes verwendet wird.

Gemäß der weiteren Variante kann ein Verfahren folgende Schritte umfassen:
- Erfassen eines Fahrmanövers mittels eines in einem Kraftfahrzeug angeordneten Fahrzeuggeräts, wobei das Fahrmanöver eine Richtungsänderung und eine Geschwindigkeitsverringerung innerhalb eines vorbestimmten Zeitraums und/oder innerhalb einer vorbestimmten Wegstrecke umfasst,
- wenn das Fahrmanöver erfasst wurde (oder mit anderen Worten ansprechend auf das Erfassen des Fahrmanövers), Senden einer Ankunftsinformation mittels des Fahrzeuggeräts an eine zentrale Datenverarbeitungseinrichtung, wobei die Ankunftsinformation eine Ankunftsposition und eine Ankunftszeit umfasst, wobei die Ankunftsposition eine Position des Kraftfahrzeugs beim Erfassen des Fahrmanövers angibt und wobei die Ankunftszeit eine aktuelle Zeit beim Erfassen des Fahrmanövers angibt, und
- Senden einer Abfahrtsinformation mittels des Fahrzeuggeräts an die zentrale Datenverarbeitungseinrichtung, wenn sich das Kraftfahrzeug zu einer Zeit nach der Ankunftszeit um eine vorbestimmte Entfernung von der Ankunftsposition entfernt hat.

Das vorgesehene Fahrmanöver kann dem Befahren einer Autobahnabfahrt zu einem Parkplatz an einer Autobahn entsprechen.

Das Fahrzeuggerät kann einen oder mehrere Sensoren aufweisen oder mit einem oder mehreren Sensoren gekoppelt sein. Die Sensoren können einen GNSS-Empfänger, einen Beschleunigungssensor und/oder ein Gyroskop umfassen. Bevorzugt werden dem Fahrzeuggerät Messwerte von allen vorgenannten Sensoren bereitgestellt.

Das Fahrmanöver kann mindestens eine Richtungsänderung (also eine Lenkbewegung) und mindestens eine Geschwindigkeitsverringerung (also ein Abbremsen) innerhalb eines vorbestimmten Zeitraums und/oder innerhalb einer vorbestimmten Wegstrecke umfassen. Der vorbestimmte Zeitraum kann beispielsweise 20 Sekunden, 10 Sekunden oder 5 Sekunden betragen. Die vorbestimmte Weglänge kann beispielsweise 400 Meter, 200 Meter, 100 Meter oder 50 Meter betragen. Das Fahrmanöver wird also innerhalb kurzer Zeit und/oder auf einer kurzen Strecke ausgeführt. Die Richtungsänderung und die Geschwindigkeitsverringerung können nacheinander oder auch gleichzeitig ausgeführt werden.

Wenn das Fahrmanöver detektiert wird, werden eine Position des Kraftfahrzeugs (Ankunftsposition), beispielsweise mittels eines GNSS-Empfängers, und die Zeit (Ankunftszeit) bestimmt. Die Ankunftsposition und die Ankunftszeit werden mit der Ankunftsinformation an die Zentrale übermittelt. Es kann vorgesehen sein, dass die Ankunftsinformation unmittelbar nach Erfassen des Fahrmanövers versendet wird. Die Ankunftsinformation kann zusätzlich die Fahrtrichtung umfassen. Hierdurch kann die Bestimmung des Parkplatzes an einer Autobahn erleichtert werden.

Wenn das Kraftfahrzeug zu einem späteren Zeitpunkt den Parkplatz verlässt, wird eine Abfahrtsinformation an die Zentrale übermittelt, sobald eine Entfernung des Kraftfahrzeugs von der Ankunftsposition einen vorbestimmten Wert überschreitet. Die vorbestimmte Entfernung kann beispielsweise 500 Meter, 1 Kilometer oder 2 Kilometer sein. Die Position des Kraftfahrzeugs kann nach der Abfahrt vom Parkplatz beispielsweise mittels eines GNSS-Empfängers ermittelt werden. Hieraus kann dann die Entfernung von der Ankunftsposition bestimmt werden.

Es kann vorgesehen sein, dass bei dem Fahrmanöver die Geschwindigkeitsverringerung nach der Richtungsänderung erfolgt, also innerhalb des vorbestimmten Zeitraums und/oder innerhalb der vorbestimmten Wegstrecke erst eine Lenkbewegung und anschließend ein Abbremsen erfolgt. Das Fahrmanöver kann beispielsweise ein Abfahren von einer Straße auf den Parkplatz sein. Hierbei wird zunächst auf eine Ausfahrt gelenkt und anschließend gebremst.

Das Fahrmanöver kann zwei gegenläufig gerichtete Richtungsänderungen und eine an die Richtungsänderungen anschließende Geschwindigkeitsverringerung innerhalb des vorbestimmten Zeitraums und/oder innerhalb der vorbestimmten Wegstrecke umfassen.

Das Fahrmanöver kann einen Rechtsschwenk, einen an den Rechtsschwenk anschließenden Linksschwenk und eine an den Linksschwenk anschließende Geschwindigkeitsverringerung innerhalb des vorbestimmten Zeitraums und/oder innerhalb der vorbestimmten Wegstrecke umfassen. Dieses Fahrmanöver charakterisiert das Abfahren von einer Autobahnfahrspur auf eine Autobahnabfahrt.

Das Fahrmanöver kann eine erste Geschwindigkeitsverringerung (z. B. noch auf der Autobahnfahrspur), an die erste Geschwindigkeitsverringerung anschließend zwei gegenläufig gerichtete Richtungsänderungen und eine an die Richtungsänderungen anschließende zweite Geschwindigkeitsverringerung innerhalb des vorbestimmten Zeitraums und/oder innerhalb der vorbestimmten Wegstrecke umfassen.

Das Fahrmanöver kann insbesondere eine erste Geschwindigkeitsverringerung, einen an die erste Geschwindigkeitsverringerung anschließenden Rechtsschwenk, einen an den Rechtsschwenk anschließenden Linksschwenk und eine an den Linksschwenk anschließende zweite Geschwindigkeitsverringerung innerhalb des vorbestimmten Zeitraums und/oder innerhalb der vorbestimmten Wegstrecke umfassen.

Bei allen hier offenbarten Fahrmanövern kann vorgesehen sein, dass bereits während der Richtungsänderung eine gewisse (recht sanfte) Geschwindigkeitsverringerung erfolgt, also ein leichtes Bremsen während der Lenkbewegung(en). Die wesentliche Geschwindigkeitsverringerung, mit welcher eine deutliche Reduktion der Geschwindigkeit erreicht wird (z. B. Verringerung der Geschwindigkeit um wenigstens ein Drittel oder um wenigstens die Hälfte der Ausgangsgeschwindigkeit vor dem Fahrmanöver), erfolgt nach der Lenkbewegung bzw. den Lenkbewegungen.

Es kann vorgesehen sein, dass die Ankunftsinformation nur versendet wird, wenn mit dem Fahrmanöver eine Geschwindigkeit des Kraftfahrzeugs unter einen vorbestimmten Geschwindigkeitsschwellwert verringert wird. Der Geschwindigkeitsschwellwert kann beispielsweise 30 km/h, 20 km/h oder 10 km/h sein. Es wird also erkannt, dass das Kraftfahrzeug stark verlangsamt und voraussichtlich zum Stillstand kommt. Hierdurch kann im Fahrzeuggerät eine Ausfahrt zu einem Parkplatz, an welchem das Kraftfahrzeug voraussichtlich anhält, von einer anderen Ausfahrt, welche das Kraftfahrzeug zur Richtungsänderung befährt, unterschieden werden.

Das Fahrmanöver kann ein Rangiermanöver umfassen, wobei ein Rangiermanöver eine Kombination von mehreren Lenkbewegungen (z B. 2, 3 oder 4 Lenkbewegungen) mit einer starken Winkelstreuung (z. B. Änderung des Lenkeinschlags zwischen zwei Lenkbewegungen größer als 30°) bei geringer Geschwindigkeit (z. B. kleiner als 10 km/h) ist.

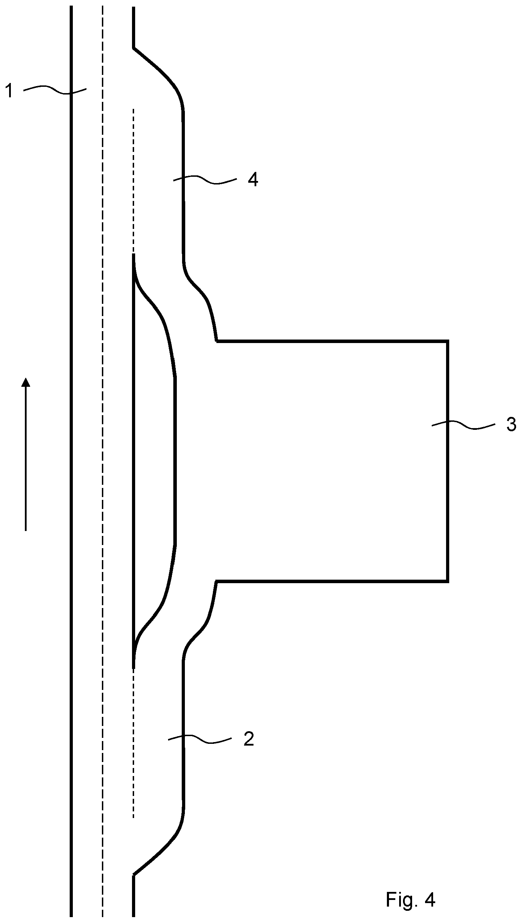

Fig. 4 zeigt eine schematische Darstellung eines Autobahnabschnitts. Der Übersichtlichkeit halber ist nur eine Fahrtrichtung dargestellt, wobei die Fahrtrichtung (von unten nach oben) zur Veranschaulichung durch den Pfeil angegeben ist. Die Autobahn 1 ist im gezeigten Beispiel zweispurig ausgeführt. Eine andere Anzahl von Spuren ist jedoch möglich und hat keinen Einfluss auf die Umsetzung des Verfahrens. Eine Ausfahrt 2 führt von der Autobahn 1 zu einem Parkplatz 3. Eine Auffahrt 4 verbindet den Parkplatz 3 mit der Autobahn 1 und erlaubt nach Verlassen des Parkplatzes eine Weiterfahrt auf der Autobahn 1.

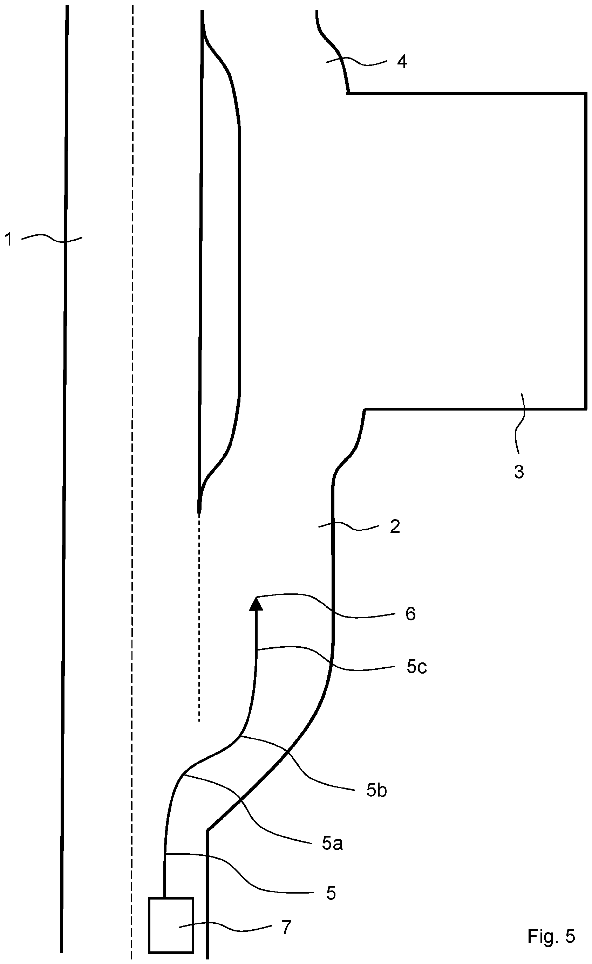

In Fig. 5 ist eine vergrößerte Darstellung der Ausfahrt 2 gezeigt. Ein LKW 7 fährt auf einer Route 5 auf die Ausfahrt 2, um zu dem Parkplatz 3 zu gelangen. Auf der Route 5 führt der LKW 7 ein Fahrmanöver aus, was im dargestellten Beispiel drei Aktionen umfasst, nämlich zunächst einen Rechtsschwenk 5a, anschließend einen Linksschwenk 5b und schließlich ein Abbremsen 5c. Sobald das Fahrmanöver abgeschlossen ist, befindet sich der LKW 7 an einer Ankunftsposition 6. Das im LKW 7 angeordnete Fahrzeuggerät 10 sendet eine Ankunftsinformation an die Zentrale 20. Die Ankunftsinformation umfasst die Ankunftsposition 6, hier in Form von GNSS-Koordinaten, und die Uhrzeit beim Abschluss des Fahrmanövers, also beim Erreichen der Ankunftsposition 6. Ebenfalls möglich ist, dass das Fahrmanöver vier Aktionen in folgender Reihenfolge umfasst (nicht in den Figuren dargestellt): ein erstes Abbremsen, einen Rechtsschwenk, einen Linksschwenk und ein zweites Abbremsen.

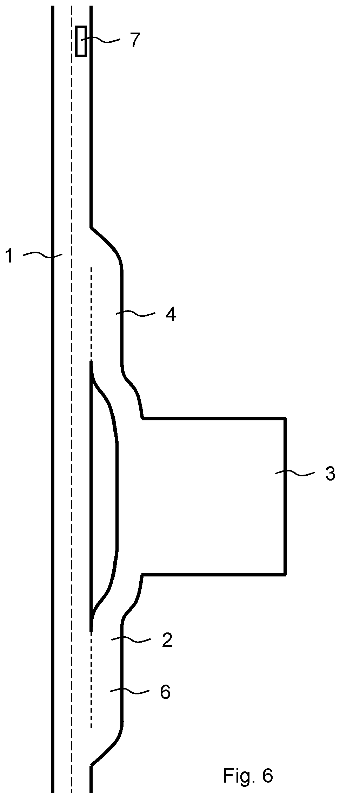

In Fig. 6 ist eine weitere Ansicht des Autobahnabschnitts dargestellt. Der LKW 7 hat den Parkplatz 3 über die Ausfahrt 4 wieder verlassen. Sobald der LKW 7 eine vorbestimmte Entfernung von der Ankunftsposition 6 erreicht (z. B. 500 m, 1 km oder 2 km), sendet das Fahrzeuggerät 10 eine Abfahrtsinformation an die Zentrale 20.

Die Zentrale 20 ist eingerichtet, die Ankunftsinformation zu empfangen und die in der Ankunftsinformation enthaltene Ankunftsposition mit im Speicher 22 der Zentrale 20 vorhandenen Parkplatzpositionen abzugleichen. Wenn die Ankunftsposition einem Parkplatz zugeordnet werden kann, wird die Belegung des Parkplatzes aktualisiert. In einer Variante dieser Ausführungsform wird ergänzend anhand der ebenfalls im Speicher 22 der Zentrale 20 abgelegten Parkplatzkapazität und der aktuellen Belegung des Parkplatzes die Anzahl von verbleibenden freien Abstellplätze auf dem Parkplatz bestimmt. Die Zentrale 20 kann eingerichtet sein, die Anzahl an freien Abstellplätzen auf dem Parkplatz an andere Verkehrsteilnehmer zu übermitteln, beispielsweise als Reaktion auf eine konkrete Anfrage von einem Fahrzeug zu einem bestimmten Parkplatz oder als Broadcast. Das Fahrzeuggerät 10 kann wiederum eingerichtet sein, eine von der Zentrale 20 empfangene Information zu freien Abstellplätzen eines Parkplatzes auszugeben, beispielsweise als Anzeige auf einem Bildschirm (nicht dargestellt).

Es wird darauf hingewiesen, dass "umfassend" und "aufweisend" keine anderen Elemente oder Schritte ausschließt und "eine" oder "ein" keine Vielzahl ausschließt. Bezugszeichen in den Ansprüchen sind nicht als Einschränkungen anzusehen.

Die in der Beschreibung, den Ansprüchen und den Figuren offenbarten Merkmale können für die Verwirklichung von Ausführungsformen sowohl einzeln als auch in beliebiger Kombination miteinander relevant sein.

## Patentansprüche

1. Computerimplementiertes Verfahren zum Führen eines Inventars eines mehrere Stellplätze aufweisenden Parkplatzes mit folgenden Schritten:
- während einer Fahrt eines Kraftfahrzeugs mittels eines dem Kraftfahrzeug zugeordneten Fahrzeuggeräts:
- Bestimmen von Positionsinformationen, wobei die Positionsinformationen jeweils eine Position des Kraftfahrzeugs angeben, und
- Speichern der Positionsinformationen in einem Speicher des Fahrzeuggeräts,
- bei Beendigung der Fahrt:
- Senden, mittels des Fahrzeuggeräts, der gespeicherten Positionsinformationen zusammen mit einem Identifikationsmerkmal an eine zentrale Datenverarbeitungseinrichtung,
- Prüfen, mittels der zentralen Datenverarbeitungseinrichtung, anhand einer Ankunftsposition, ob das Kraftfahrzeug sich auf einem Parkplatz befindet, wobei die Ankunftsposition die zuletzt bestimmte Position ist, und
- Aufnehmen, mittels der zentralen Datenverarbeitungseinrichtung, des Identifikationsmerkmals oder eines aus dem Identifikationsmerkmal abgeleiteten Pseudonyms in ein Inventar des Parkplatzes, wenn die Prüfung positiv ausfällt,
- nach Wiederaufnahme der Fahrt:
- Senden, mittels des Fahrzeuggeräts, des Identifikationsmerkmals an die zentrale Datenverarbeitungseinrichtung und
- Entfernen, mittels der zentralen Datenverarbeitungseinrichtung, des Identifikationsmerkmals oder gegebenenfalls des Pseudonyms aus dem Inventar des Parkplatzes.

2. Verfahren nach Anspruch 1, wobei die Beendigung der Fahrt durch ein Ausschalten der Zündung des Kraftfahrzeugs, eine Nutzereingabe an dem Fahrzeuggerät oder ein Ausschalten des Fahrzeuggeräts bestimmt wird.

3. Verfahren nach Anspruch 1 oder 2, wobei nach Wiederaufnahme der Fahrt das Identifikationsmerkmal bei Eintritt einer vorbestimmten Bedingung versendet wird.

4. Verfahren nach Anspruch 3, wobei die vorbestimmte Bedingung das Zurücklegen einer vorbestimmten Strecke oder das Verstreichen einer vorbestimmten Zeitdauer nach Wiederaufnahme der Fahrt ist.

5. Verfahren nach einem der vorangehenden Ansprüche, wobei das Identifikationsmerkmal ein Identifikationsmerkmal des Fahrzeuggeräts oder des Kraftfahrzeugs ist.

6. Verfahren nach einem der vorangehenden Ansprüche, wobei nach dem Empfangen der Positionsinformationen mit dem Identifikationsmerkmal in der zentralen Datenverarbeitungseinrichtung das Identifikationsmerkmal pseudonymisiert wird, bevor die Positionsinformationen ausgewertet werden.

7. Verfahren nach Anspruch 6, wobei die Pseudonymisierung mittels einer Hashfunktion erfolgt, wobei das Identifikationsmerkmal mit der Hashfunktion in einen Hashwert umgewandelt wird.

8. Verfahren nach Anspruch 7, wobei die Hashfunktion auf eine Kombination aus dem Identifikationsmerkmal und einem Salt angewendet wird, um den Hashwert zu erzeugen.

9. Verfahren nach Anspruch 7 oder 8, wobei der Hashwert in das Inventar des Parkplatzes aufgenommen wird, wenn das Kraftfahrzeug sich auf einem Parkplatz befindet, und der Hashwert nach Wiederaufnahme der Fahrt aus dem Inventar des Parkplatzes entfernt wird.

10. Verfahren nach einem der vorangehenden Ansprüche, wobei in einem Speicher der zentralen Datenverarbeitungseinrichtung Positionsdaten von Parkplätzen gespeichert sind und wobei die Ankunftsposition mittels der zentralen Datenverarbeitungseinrichtung mit den gespeicherten Positionsdaten abgeglichen wird, um zu bestimmen, ob das Kraftfahrzeug sich auf einem Parkplatz befindet.

11. Verfahren nach einem der vorangehenden Ansprüche, wobei eine Ankunftszeit bestimmt wird und die Ankunftszeit mit dem Identifikationsmerkmal oder dem aus dem Identifikationsmerkmal abgeleiteten Pseudonym im Inventar gespeichert wird, wobei die Ankunftszeit dem Zeitpunkt der Ankunft des Kraftfahrzeugs auf dem Parkplatz entspricht, und wobei das Identifikationsmerkmal oder gegebenenfalls das Pseudonym des Identifikationsmerkmals aus dem Inventar des Parkplatzes entfernt wird, wenn seit der Ankunftszeit ein vorbestimmter Zeitraum vergangen ist.

12. System zum Führen eines Inventars eines mehrere Stellplätze aufweisenden Parkplatzes aufweisend ein Fahrzeuggerät, welches einem Kraftfahrzeug zugeordnet ist, und eine zentrale Datenverarbeitungseinrichtung,
wobei das Fahrzeuggerät eingerichtet ist:
- während einer Fahrt des Kraftfahrzeugs Positionsinformationen zu bestimmen, wobei die Positionsinformationen jeweils eine Position des Kraftfahrzeugs angeben, und die Positionsinformationen in einem Speicher zu speichern,
- bei Beendigung der Fahrt die gespeicherten Positionsinformationen zusammen mit einem Identifikationsmerkmal an eine zentrale Datenverarbeitungseinrichtung zu senden, und
- nach Wiederaufnahme der Fahrt das Identifikationsmerkmal an die zentrale Datenverarbeitungseinrichtung zu senden,
wobei die zentrale Datenverarbeitungseinrichtung eingerichtet ist:
- bei Beendigung der Fahrt anhand einer Ankunftsposition zu prüfen, ob das Kraftfahrzeug sich auf einem Parkplatz befindet, wobei die Ankunftsposition die zuletzt bestimmte Position ist, und das Identifikationsmerkmal oder ein aus dem Identifikationsmerkmal abgeleitetes Pseudonym in ein Inventar des Parkplatzes aufzunehmen, wenn die Prüfung positiv ausfällt, und
- nach Wiederaufnahme der Fahrt das Identifikationsmerkmal oder gegebenenfalls das Pseudonym aus dem Inventar des Parkplatzes zu entfernen.

13. System nach Anspruch 12, wobei das Fahrzeuggerät und die zentrale Datenverarbeitungseinrichtung als Komponenten eines Mautsystems ausgebildet sind.

14. System nach einem der Ansprüche 12 und 13, wobei das Fahrzeuggerät fest in dem Kraftfahrzeug verbaut ist.

15. System nach einem der Ansprüche 12 und 13, wobei das Fahrzeuggerät als mobiles Endgerät ausgeführt ist und lösbar in dem Kraftfahrzeug angeordnet ist.

## Geänderte Patentansprüche

### Geänderte Patentansprüche gemäss Regel 137(2) EPÜ.

1. Computerimplementiertes Verfahren zum Führen eines Inventars eines mehrere Stellplätze aufweisenden Parkplatzes (3) mit folgenden Schritten:
- während einer Fahrt eines Kraftfahrzeugs mittels eines dem Kraftfahrzeug zugeordneten Fahrzeuggeräts (10):
- Bestimmen (200) von Positionsinformationen, wobei die Positionsinformationen jeweils eine Position des Kraftfahrzeugs angeben, und
- Speichern der Positionsinformationen in einem Speicher (12) des Fahrzeuggeräts (10),
- bei Beendigung der Fahrt:
- Senden (210), mittels des Fahrzeuggeräts (10), der gespeicherten Positionsinformationen zusammen mit einem Identifikationsmerkmal an eine zentrale Datenverarbeitungseinrichtung (20),
- Prüfen (220), mittels der zentralen Datenverarbeitungseinrichtung (20), anhand einer Ankunftsposition, ob das Kraftfahrzeug sich auf einem Parkplatz (3) befindet, wobei die Ankunftsposition die zuletzt bestimmte Position ist, und
- Aufnehmen (230), mittels der zentralen Datenverarbeitungseinrichtung (20), des Identifikationsmerkmals oder eines aus dem Identifikationsmerkmal abgeleiteten Pseudonyms in ein Inventar des Parkplatzes (3), wenn die Prüfung positiv ausfällt,
- nach Wiederaufnahme der Fahrt:
- Senden (240), mittels des Fahrzeuggeräts (10), des Identifikationsmerkmals an die zentrale Datenverarbeitungseinrichtung (20) und
- Entfernen (250), mittels der zentralen Datenverarbeitungseinrichtung (20), des Identifikationsmerkmals oder gegebenenfalls des Pseudonyms aus dem Inventar des Parkplatzes (3).

2. Verfahren nach Anspruch 1, wobei die Beendigung der Fahrt durch ein Ausschalten der Zündung des Kraftfahrzeugs, eine Nutzereingabe an dem Fahrzeuggerät oder ein Ausschalten des Fahrzeuggeräts bestimmt wird.

3. Verfahren nach Anspruch 1 oder 2, wobei nach Wiederaufnahme der Fahrt das Identifikationsmerkmal bei Eintritt einer vorbestimmten Bedingung versendet wird.

4. Verfahren nach Anspruch 3, wobei die vorbestimmte Bedingung das Zurücklegen einer vorbestimmten Strecke oder das Verstreichen einer vorbestimmten Zeitdauer nach Wiederaufnahme der Fahrt ist.

5. Verfahren nach einem der vorangehenden Ansprüche, wobei das Identifikationsmerkmal ein Identifikationsmerkmal des Fahrzeuggeräts oder des Kraftfahrzeugs ist.

6. Verfahren nach einem der vorangehenden Ansprüche, wobei nach dem Empfangen der Positionsinformationen mit dem Identifikationsmerkmal in der zentralen Datenverarbeitungseinrichtung das Identifikationsmerkmal pseudonymisiert wird (215), bevor die Positionsinformationen ausgewertet werden.

7. Verfahren nach Anspruch 6, wobei die Pseudonymisierung mittels einer Hashfunktion erfolgt, wobei das Identifikationsmerkmal mit der Hashfunktion in einen Hashwert umgewandelt wird.

8. Verfahren nach Anspruch 7, wobei die Hashfunktion auf eine Kombination aus dem Identifikationsmerkmal und einem Salt angewendet wird, um den Hashwert zu erzeugen.

9. Verfahren nach Anspruch 7 oder 8, wobei der Hashwert in das Inventar des Parkplatzes (3) aufgenommen wird, wenn das Kraftfahrzeug sich auf einem Parkplatz (3) befindet, und der Hashwert nach Wiederaufnahme der Fahrt aus dem Inventar des Parkplatzes (3) entfernt wird.

10. Verfahren nach einem der vorangehenden Ansprüche, wobei in einem Speicher (22) der zentralen Datenverarbeitungseinrichtung (20) Positionsdaten von Parkplätzen gespeichert sind und wobei die Ankunftsposition mittels der zentralen Datenverarbeitungseinrichtung (20) mit den gespeicherten Positionsdaten abgeglichen wird, um zu bestimmen, ob das Kraftfahrzeug sich auf einem Parkplatz (3) befindet.

11. Verfahren nach einem der vorangehenden Ansprüche, wobei eine Ankunftszeit bestimmt wird und die Ankunftszeit mit dem Identifikationsmerkmal oder dem aus dem Identifikationsmerkmal abgeleiteten Pseudonym im Inventar gespeichert wird, wobei die Ankunftszeit dem Zeitpunkt der Ankunft des Kraftfahrzeugs auf dem Parkplatz (3) entspricht, und wobei das Identifikationsmerkmal oder gegebenenfalls das Pseudonym des Identifikationsmerkmals aus dem Inventar des Parkplatzes (3) entfernt wird, wenn seit der Ankunftszeit ein vorbestimmter Zeitraum vergangen ist.

12. System zum Führen eines Inventars eines mehrere Stellplätze aufweisenden Parkplatzes (3) aufweisend ein Fahrzeuggerät (10), welches einem Kraftfahrzeug zugeordnet ist, und eine zentrale Datenverarbeitungseinrichtung (20),
wobei das Fahrzeuggerät (10) eingerichtet ist:
- während einer Fahrt des Kraftfahrzeugs Positionsinformationen zu bestimmen, wobei die Positionsinformationen jeweils eine Position des Kraftfahrzeugs angeben, und die Positionsinformationen in einem Speicher (12) zu speichern,
- bei Beendigung der Fahrt die gespeicherten Positionsinformationen zusammen mit einem Identifikationsmerkmal an eine zentrale Datenverarbeitungseinrichtung (20) zu senden, und
- nach Wiederaufnahme der Fahrt das Identifikationsmerkmal an die zentrale Datenverarbeitungseinrichtung (20) zu senden,
wobei die zentrale Datenverarbeitungseinrichtung (20) eingerichtet ist:
- bei Beendigung der Fahrt anhand einer Ankunftsposition zu prüfen, ob das Kraftfahrzeug sich auf einem Parkplatz (3) befindet, wobei die Ankunftsposition die zuletzt bestimmte Position ist, und das Identifikationsmerkmal oder ein aus dem Identifikationsmerkmal abgeleitetes Pseudonym in ein Inventar des Parkplatzes (3) aufzunehmen, wenn die Prüfung positiv ausfällt, und
- nach Wiederaufnahme der Fahrt das Identifikationsmerkmal oder gegebenenfalls das Pseudonym aus dem Inventar des Parkplatzes (3) zu entfernen.

13. System nach Anspruch 12, wobei das Fahrzeuggerät (10) und die zentrale Datenverarbeitungseinrichtung (20) als Komponenten eines Mautsystems ausgebildet sind.

14. System nach einem der Ansprüche 12 und 13, wobei das Fahrzeuggerät (10) fest in dem Kraftfahrzeug verbaut ist.

15. System nach einem der Ansprüche 12 und 13, wobei das Fahrzeuggerät (10) als mobiles Endgerät ausgeführt ist und lösbar in dem Kraftfahrzeug angeordnet ist.
